(19) Europäisches Patentamt

European Patent Office

Office européen des brevets

(11) Veröffentlichungsnummer: **0 226 788 B1**

(12) **EUROPÄISCHE PATENTSCHRIFT**

(45) Veröffentlichungstag der Patentschrift:
30.01.91 Patentblatt 91/05

(21) Anmeldenummer: 86115521.6

(22) Anmeldetag: 08.11.86

(51) Int. Cl.⁵: **B01D 63/00,** B01F 3/04,
B01F 5/06, B01D 53/18,
B01D 35/22, B01J 4/04,
// C12M3/00

(30) Priorität: 22.11.85 CH 4993/85

(43) Veröffentlichungstag der Anmeldung:
01.07.87 Patentblatt 87/27

(45) Bekanntmachung des Hinweises auf die
Patenterteilung:
30.01.91 Patentblatt 91/05

(84) Benannte Vertragsstaaten:
AT BE DE FR GB IT LU NL SE

(56) Entgegenhaltungen:
FR-A- 1 093 157
FR-A- 2 134 377
FR-A- 2 231 408

(56) Entgegenhaltungen:
FR-A- 2 271 857
GB-A- 1 298 072
GB-A- 1 592 771
US-A- 4 207 182

(73) Patentinhaber: GEBRÜDER SULZER
AKTIENGESELLSCHAFT
Zürcherstrasse 9
CH-8401 Winterthur (CH)

(72) Erfinder: Ziegler, Heinrich, Dr.
Im Baumgarten
CH-8479 Rutschwil (CH)

(74) Vertreter: Sparing Röhl Henseler
Patentanwälte European Patent Attorneys
Rethelstrasse 123
D-4000 Düsseldorf 1 (DE)

(54) **Element mit permeabler Wandung.**

## Beschreibung

Die Erfindung betrifft eine Stofftauschvorrichtung mit einem einen Fluidstrom aufnehmenden Gefäß, in dem ein Element angeordnet ist, dessen Wandung für mindestens eine Komponente des Fluidstroms permeabel ist und einen Innenraum des Elements abgrenzt, welcher an einen Raum außerhalb des Gefässes durch die Gefäßwand angeschlossen ist.

Eine derartige zum Filtrieren dienende Vorrichtung ist aus der GB-A-2 011 796 bekannt. Ein abzutrennendes Filtrat dringt durch die permeable Wandung in den Innenraum des Elements und wird durch diesen Raum und durch die Wand des Gefässes in einen Raum ausserhalb des Gefässes weggeführt.

Bei der Filtration beliebiger Medien bzw. Fluide stellt sich immer die Aufgabe, jedem einzelnen kleinsten Teil des Mediums die Gelegenheit zu bieten, die der Filteröffnung entsprechenden Anteile als Filtrat an getrennte Sammelräume für das Filtrat abzugeben. Das Filter ist somit umso wirksamer, je besser es gelingt, aus einem gegebenen Fluidstrom alle filtergängigen Anteile abzuscheiden.

Bei der praktischen Filtration stösst diese Zielsetzung auf erhebliche Schwierigkeiten. An den Wänden, die die Sammelräume für das Filtrat abgrenzen, bilden sich innerhalb des durchströmten Gefässes Grenzschichten aus, in denen die Durchflussgeschwindigkeit bzw. Durchtrittsgeschwindigkeit des Filtrats durch solche Wandungsschichten abnimmt, so dass nur ein kleiner Teil des durchströmenden Fluidstromes zur Berührung mit der eigentlichen Wandung kommt. Durch den Entzug des filtergängigen Anteils nimmt in vielen Fällen die Viskosität des zu filternden Fluids zu, was zur weiteren Konservierung bzw. Aufwachsen dieser Grenzschichten beiträgt.

Es wurde daher immer wieder versucht, einen zusätzlichen Austausch der zu filtrierenden Wandung nahen Zonen des durchströmenden Fluidstromes zu bewirken, z.B. durch vorgeschaltete Drahtsiebe als Turbulenzgeneratoren oder Bewegung einer Filterfläche relativ zu der Strömung. Bei den Durchströmgeschwindigkeiten, die zu einer hinreichenden Erfassung des filtergängigen Anteils führen, sind aber solche Massnahmen entweder sehr energieverzehrend oder in ihrer Wirksamkeit begrenzt und noch dazu aufwendig. Dazu gehören verschiedene wirbelverursachende Vorrichtungen an den Wänden, verschiedene Rührapparate oder Abstreifflügel, die entlang der Filtrationsflächen wirken oder die Vorrichtungen, die unter Gattungsbezeichnung "statische Mischer" bekannt sind.

So werden z.B. in den Zustrom von Filtrationsflächen Leitflächen eingebaut, die im Nachstrom hinter den Filtrationsflächen Flechtströmungen bewirken. Es ist auch bekannt, die Filterfläche selbst aktiv quer zur Durchtrittsrichtung des Mischguts zu bewegen. In vielen Anwendungsfällen sind die Durchströmgeschwindigkeiten im laminaren Bereich. Dem durch die Filtration zu entfernenden Anteil des Mediumstromes soll ein Kontakt mit der Filterfläche während einer ausreichenden Zeit ermöglicht werden. Die Flechtströmungen klingen rasch ab und sind für die nachgeschalteten Filterflächen wenig wirksam. Bewegte Filterflächen sind schon wirksam, bedingen aber einen grossen technischen Aufwand.

Die oben beschriebene Problematik wird mit abnehmender Porengrösse der Filter immer schwieriger.

Turbulenzgeneratoren erzeugen Verwirbelungen im Nachstrom, die bei den in solchen Systemen üblichen Reinold-Zahlen einige Male die charakteristische Abmessung des Turbulenzgenerators betragen. Sie werden damit für die Filterflächen nur sehr begrenzt wirksam.

Der vorliegenden Erfindung liegt die Aufgabe zugrunde, die bereits geschilderten Nachteile der bekannten Lösungen zu beseitigen. Dabei soll erreicht werden, dem durch die Filtration zu entfernenden Anteil bzw. dem durch die Wandung abzuführenden Anteil des Fluidstromes den Kontakt mit den Wandungen während ausreichender Zeit zu ermöglichen, an der Wandung die Rückstände abzubauen, die sich an der Oberfläche der Wandung während der Funktion gebildet haben, und ihre Entstehung zu verhindern, Konzentrationsunterschiede in dem Fluid auszugleichen, die vorher angeführten Ziele mit einem Minimum an Strömungsverlusten und an technischem Aufwand zu erreichen. Die erfindungsgemässen Elemente sollen besonders auch für Verfahren, die kleine bis kleinste Porengrössen in dem zu filtrierenden Material brauchen geeignet sein.

Diese Aufgaben werden dadurch gelöst, daß das Element aus mehreren Platten, Lamellen oder Rohren besteht, welche Leitflächen eines statischen Mischers bilden, die Flechtströmungen erzeugen, wodurch das Element einen Turbulenzgenerator bildet.

Die Leitflächen und Filterflächen bilden baulich eine Einheit. Die von den Leitflächen ausgehenden Flechtströmungen sind schon in der Entstehung für die Filteroberfläche wirksam. Damit stehen höhere Schubspannungen an den Filterflächen zur Verfügung, als dies bei den früheren nachgeschalteten oder vorgeschalteten Systemen möglich war. Die Filteroberfläche bleibt offen, die Oeffnungen sind nicht durch jegliche Ablagerungen behindert. Damit wird die Funktion des Durchmischens der zu behandelnden Fluidströme mit dem Angebot an Filterfläche vereinigt. Dies gelingt durch die Verwendung einer in dem Innenraum durchlässigen Struktur, die auf den dem Fluidstrom zugewandten Flächen Filtereigenschaften aufweist, die dem verfolgten Zweck entsprechen. Durch die Erfindung ist die Filterfläche selbst als Turbulenzgenerator ausgebildet. Diese Wandstrukturen eignen sich als Sammler für das abzuführende Filtrat einerseits, anderseits bewirkt ihre Geometrie und die Zusammenstellung der Wände eine ständige Neuorientierung und intensive Durchmischung des vorbeiströmenden Fluidstromes, derart, dass die filternahen Grenzschichten erneut und durch ursprünglich in die Kanalmitte strebende Medienteile ersetzt werden. So entsteht eine sogenannte Pfropf-Strömung.

Durch die Vereinigung mischender und filternder Elemente gelingt es, die dem Mischer eigentümliche, dauernde Anregung von Umordnungsvorgängen für den Fluidstrom nutzbar zu machen, ohne dass die fast unlösbaren Probleme des Abklingens der initialen Turbulenz eines Vormischers in der Filterzone noch bestehen. Zudem wird der bauliche Aufwand bisher getrennter Aggregate vereinigt.

In den Unteransprüchen werden sinnvolle Ausführungsbeispiele des Erfindungsgegenstandes angegeben.

Im folgenden wird der Erfindungsgegenstand und die mit ihm erzielbaren Vorteile und ausführbaren Verfahrensschritte näher beschrieben und erklärt. Die Beschreibung bezieht sich auf Zeichnungen, in welchen zeigen :

Figur 1 ein Element mit permeabler Wandung im Querschnitt, in Form einer Lamelle,

Figur 2 das Element im Querschnitt in Form einer Platte oder eines Rohres,

Figur 3 in schematischem Querschnitt ein Element, angeordnet in einem Gefäss, welches mit einem Raum umgeben ist,

Figur 4 ein Ausführungsbeispiel des Elements in perspektivischer Darstellung, teilweise geschnitten,

Figur 5 ein geformtes Element, eingebaut in einem Gefäss in Aufsicht, gemäss dem vertikalen Pfeil in Figur 3,

Figur 6 einen Querschnitt durch die Struktur in Figur 5 gemäss der Linie A/A in Figur 5,

Figur 7 ein Element in Form einer gewellten Lamelle,

Figuren 8 und 9 einen Querschnitt durch einen ersten und durch einen zweiten Abschnitt eines Gefässes mit den Elementen,

Figur 10 ein Element, geformt zu einem schraubenförmigen, statischen Mischer, eingebaut in einem Gefäss in schematischer, perspektivischer Darstellung,

Figur 11 Elemente in Form eines Rohres, zusammengestellt zu einem statischen Mischer, in schematischer Darstellung,

Figur 12 plattenförmige Elemente, zusammengebaut zu einem statischen Mischer in schematischer Darstellung,

Figur 13 lamellenförmige, gewellte Elemente zusammengebaut zu einem statischen Mischer in schematischer Darstellung,

Figur 14 einen statischen Mischer bildendes Element, eingebaut in einem Gefäss in der Sicht, gemäss Linie B/B in Figur 6.

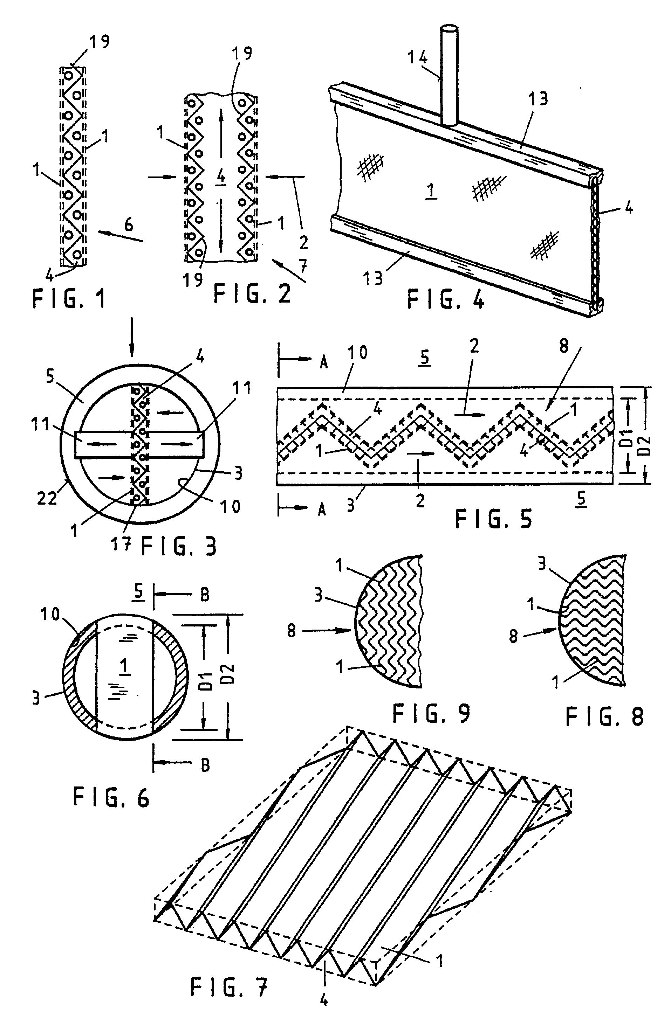

Das Element, wie es z.B. in Figur 1 oder 2 besonders klar dargestellt ist, weist eine permeable Wandung 1 auf. Diese Wandung stützt sich auf ein Stützgitter 19. Wie es in Figur 1 dargestellt ist, kann das Stützgitter 19 selber einen Innenraum 4 bilden, der von der Wandung 1 begrenzt ist. Die Figur 2 zeigt die weitere Möglichkeit, wo der Innenraum 4 des Elementes zwischen zwei Stützgitterstrukturen gebildet ist. Wie gezeigt, kann die tragende Struktur des Stützgitters aus Traggeflechten gebildet werden, die eine innere Durchlässigkeit aufweisen, und wenn sie an den Grenzflächen zu einem Fluidstrom mit Wandungen bedeckt sind, müssen die tragenden Strukturen mindestens dreimal grössere mittlere Durchlassöffnungen aufweisen, als es das Material der Wandung aufweist, um einen Fluss des Fluids durch den Innenraum 4 zu ermöglichen.

Im Falle der Figur 1 handelt es sich um ein Element, das in Form einer Lamelle gebaut ist. Im Falle der Figur 2 kann es sich um ein Element handeln, das in Form einer Platte oder auch in Form eines Rohres gebaut ist.

Die in der Figur 5 bzw. in Figur 6 dargestellte Form des Elements ist eine einfach gewellte Platte.

Eine solche einzelne gewellte Lamelle oder auch gewellte Platte ist in perspektivischer Darstellung in Figur 7 zu sehen Hierbei wird jeweils aus mehreren der dargestellten Elemente ein statischer Mischer gebildet, der einen Turbulenzgenerator 8 darstellt.

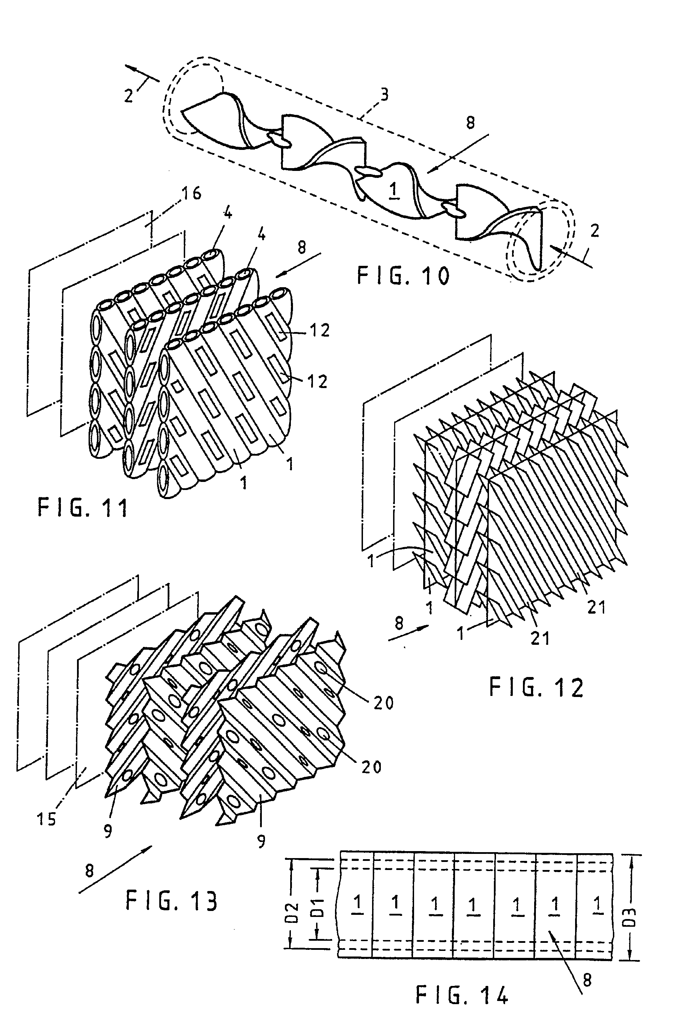

In anderen Fällen werden eine Anzahl von ähnlich geformten Elementen zu einem Modul zusammengestellt, so dass ein Turbulenzgenerator gestaltet ist, welcher einen statischen Mischer 8 bildet. Beispiele solcher zu statischen Mischern zusammengebauten, erfindungsgemässen Elemente sind in den Figuren 10, 11, 12 und 13 gezeigt. Dabei wird der statische Mischer 8, der in der Figur 10 dargestellt ist, ein erfindungsgemässes Element, welches zu einer Schraubenform geformt ist, in einem rohrartigen Gefäss 3 von einem Fluidstrom 2 umflossen. Der statische Mischer 8, gemäss Figur 11, wird von erfindungsgemässen Elementen in Form von Röhrchen zusammengebaut. Die Röhrchen in den einzelnen Lagen 16 des Mischers 8 kreuzen einander. Der statische Mischer gemäss Figur 12 weist plattenförmige Elemente auf, deren Wände mit turbulenzerzeugenden Flügeln 21 versehen sind, wobei die Richtung der Flügel abwechselnd an den einzelnen plattenartigen Elementen einander kreuzt. Der Turbulenzgenerator 8, der in Figur 13 gezeigt ist, ist zusammengestellt aus lamellenförmigen Elementen 9, die gewellt sind.

Das Element mit der permeablen Wandung 1 ist in einem einen Fluidstrom, welcher mit Pfeilen 2 angedeutet ist, aufnehmenden Gefäss 3 angeordnet. Die Wandung 1 ist mindestens für eine Komponente des Fluids durchlässig und grenzt einen Innenraum 4 des Elements ab. Dieser ist an einen Raum 5 ausserhalb des Gefässes 3 durch die Gefässwand 10 angeschlossen. Dieses ist am besten anhand der Figur 3 gezeigt, wo der Innenraum 4 mittels Leitungen 11 durch die Gefässwand 10 mit dem ausserhalb des Gefässes 3 sich befindlichen Raum 5 verbunden ist.

Genau so anschaulich ist dieses mittels Figur 6 gezeigt, die zusammen mit der Figur 5 ein in einem Rohrstück 10 eingebautes gewelltes Element zeigt, dessen Innenraum 4 durch die Wand 10 des rohrförmigen Gefässes 3 in einen Raum 5 ausserhalb des Gefässes 3 unmittelbar mündet.

Falls es sich um eine Anwendung des Elements als Filterelement handelt, so ist die Wandung nur für eine Komponente des Fluidstromes 2 in dem Gefäss 3 durchlässig, welche als Filtrat durch die Wandung 1 und durch den Innenraum 4 im Kreuzstrom in den Raum 5 ausserhalb des Gefässes 3 fliesst.

Falls das Element zum Eintragen eines anderen Fluids, z.B. eines Gases oder einer Nahrungslösung in den Fluidstrom 2 in dem Gefäss 3 angewendet werden soll, dann ist die Wandung 1 für ein solches Fluid durchlässig, welches dann aus dem Raum 5 ausserhalb des Gefässes 3 durch den Innenraum 4 und durch die Wandung 1 im Kreuzstrom fliesst, um zu dem Fluidstrom 2 in dem Gefäss 3 gemischt zu werden. Beschrieben anhand der Figur 3 käme das beizumischende Fluid aus dem Raum 5 durch die rohrförmigen Verbindungsteile 11 in den Innenraum 4 und fliesst im Kreuzstrom durch die Wandung 1 hinein in den Fluidstrom 2 in dem Gefäss 3, zu welchem es beigemischt wird.

Die Wandung 1 kann mindestens eine Materialschichtlage aufweisen, deren Permeabilität dermassen ist, beziehungsweise deren Poren so dimensioniert sind, dass die Wandung die Filtrationsfunktion des Elements in dem

Mikro- bis Ultrafiltrations-Bereich ausüben kann. In einem solchen Falle könnte die erwähnte Materialschichtlage eine semipermeable Membran sein.

Das Element kann, wie es in Figuren 5, 7, 13, 14 gezeigt ist, eine Form einer Platte oder einer Folie haben, die gewellt sind. In einem anderen Fall, der in Figur 13 schematisch gezeigt ist, kann eine Anzahl solcher gewellten Elemente zu einem Turbulenzgenerator 8 in Form eines statischen Mischers zusammengebaut werden, auf die Weise, dass die Wellentäler der einzelnen, nebeneinander gestellten Elemente 9, 15 quer zueinander verlaufen.

Die Verbindung des Innenraumes 4 kann, wie es in Figur 6 gezeigt ist, direkt durch die Wand 10 des Gefässes in einen Raum 5 ausserhalb des Gefässes münden. Dies ist der Fall, der in Figur 5 und 6 dargestellt ist.

Es ist auch möglich und in Figur 3 dargestellt, dass der Innenraum 4 mittels eines, die permeable Wandung 1 und die Gefässwand 10 durchsetzenden Leitungsstückes 11 an den Raum 5 ausserhalb des Gefässes 3 angeschlossen ist. In der Figur 3 ist ein solcher Raum 5 als ein Raum dargestellt, der durch eine Zylinderwand 22 begrenzt ist.

Eine andere vorstellbare Verbindung zwischen dem Innenraum 4 und dem Raum 5 ausserhalb des Gefässes ist in Figur 4 dargestellt, wo das Element in einem Rahmen 13 eingefasst ist, welcher den Innenraum ringsherum dicht umfasst und aus welchem ein Verbindungsrohrstück 14 zu einem Raum 5 führt.

Wie es aus den Vorbildern der bisherigen statischen Mischer angeregt ist, kann durch das Element ein durch die Wandung 1 und durch den Innenraum 4, gegen diesen geschlossener Durchtritt, 20 im Figur 13, führen, so dass der Fluidstrom 2 in dem Gefäss 3 nicht nur entlang der Wandung 1 des Elements, sondern auch durch dieses fliessen kann, und so seine Richtung nicht nur entlang des Elements, sondern auch durch das Element ändern kann.

Wie es in Figur 13 angedeutet ist, können diese durchsetzenden Durchtritte 20 rohrförmig sein. Sie können auch andere Formen aben, z.B. schlitzförmig sein, wie es am Beispiel der Figur 11 gezeigt ist, wo die rohrförmigen Elemente mit Schlitzen 12 versehen sind.

Die Materialschichtlage, die die Mikro- bis Ultrafiltration des Elementes ermöglichen soll, kann eine Schicht von Polysulfon sein, die auf ein aus mehreren Lagen zusammengesintertes Stützgitter 19 aufgetragen ist und hinein imprägniert ist.

Es wäre auch vorstellbar, das Element so zu gestalten, dass der Innenraum 4 nur von einer Seite mit der permeablen Wandung 1 versehen ist. Die andere Seite des Innenraums 4 kann mit einer undurchlässigen Wand begrenzt werden. Dies dürfte jedoch ein Ausnahmefall sein, normalerweise wird der Innenraum 4 von beiden Seiten mit einer permeablen Wandung 1 versehen sein.

In den Figuren 8 und 9 ist anschaulich gemacht, dass die gewellten, lamellenförmigen Elemente nebeneinander parallel zueinander gestellt werden können, wobei in einem ersten Abschnitt die Lamellen in einer Lage liegen, die gegenüber der Lage der Lamellen in dem gleich nachfolgenden Abschnitt des Turbulenzgenerators um 90° im Raum versetzt sind.

Diese Regel der Versetzung der Leitungswege ist bei allen den hier dargestellten Beispielen der Turbulenzgeneratoren in Figuren 11, 12 oder 13 auch gezeigt. Auch hier wird die Strömungsrichtung mehrmals hintereinander umgelenkt. Dadurch wird eben die vorher erwähnte Wirbelung erzielt, die immer neue Schichten in die Nähe der Wandung 1 bringt, so dass jedes Teilchen des Fluidstromes die Möglichkeit bekommt, über eine suffiziente Zeit mit der Wandung in Berührung zu kommen.

Ein interessantes Anwendungsgebiet bietet sich für die erfindungsgemässen, zu Turbulenzgeneratoren zusammengestellten Elemente in der Fliessbettreaktoren-Technik an. In diesen Reaktoren, besonders in den schwierigen technischen Gebieten, wie es z.B. die Techniken zu Kultivationen von lebenden Zellen darstellen, werden Turbulenzgeneratoren dazu eingesetzt, um das Kultivationsfliessbett in ständiger Durchmischung zu halten und zu verhindern, dass es zur unkontrollierbaren Wirbelung in dem Fliessbett kommt, oder dass es zur wiederholten Zusammenmischung von Elementen kommt, die vorher schon einmal voneinander getrennt worden sind. Auf die oben beschriebene Weise kann man nämlich durch die zu erfindungsgemässen Turbulenzgeneratoren 8 zusammengebauten Elemente ein Fluid aus dem Raum 5 ausserhalb des Reaktionsgefässes führen, um z.B. das Fluidbett auf diese Weise zu begasen. Durch geeignete Struktur der Wandung 1, d.h. durch ihre Beschickung mit einer geeigneten porösen Membran lässt sich in so einem Reaktor eine blasenfreie Begasung in situ erreichen.

Anhand der Figur 14 soll eine mögliche Methode zur Fabrikation einer Vorrichtung erläutert werden, wo ein erfindungsgemässes Element mit der Wandung und dem Innenraum in einem rohrartigen Gefäss eingebaut ist. Es wird dann so verfahren, dass das lamellenförmige Element zuerst gewellt wird und dann in ein Rohr von einem grösseren Durchmesser als das fertige Gefäss dann haben soll eingesetzt wird. Das Element ist in diesem Rohr von einem Durchmesser D 3 in Figur 14 so eingesetzt, dass sein Innenraum im Querschnitt radial auswärts weist. Dieses Rohr, in dem das Element eingesetzt ist wird rotiert. Dabei wird in dieses Rohr ein hartbarer Harzstoff hineingegossen, der an der rotierenden Innenwand eine Schicht bildet, die die Ränder des eingesteckten Elements umfasst. Nach Aushärtung des eingegossenen Kunststoffes wird das damit hergestellte Rohr mit dem eingefassten Element aus der Büchse herausgenommen. Danach wird eine Aussenschicht der Wand des vorfabrizierten Rohres abgeschliffen oder abgedreht, so dass die Innenräume 4 von aussen zugänglich sind. Das Abschleifen bzw. Abdrehen der Oberfläche des Rohres geschieht bis zu dem in der Figur 14 angedeuteten Durchmesser D 2. Zu diesem Zustand bearbeitet, entsteht eine Einheit, bei der der Innenraum des Elements nach aussen in einen Raum ausserhalb des Raumes des Gefässes 3 geöffnet ist. Diese Einheit wird jetzt in ein zweites Rohr mit einem inneren Durchmesser, der so gross sein kann wie der in Figur 14 angegebene Durchmesser D 3 eingesteckt. Dadurch entsteht ein Gebilde, das dem in der Figur 3 dargestellten ähnlich ist. Wenn es sich um eine Anordnung des Elements handeln würde, das in Figur 3 dargestellt ist, wo sein Innenraum 4 mit dem Raum 5 durch Röhrchen 11 verbunden ist, könnte eine solche Einheit genau auf die gleiche Weise fabriziert werden, wie sie vorher mit Bezug auf die Figur 14 beschrieben wurde. Es müsste je,doch der Innenraum 4 an der Wand 10 an einer Stelle 17 gegen den Fluidstrom 2 abgedichtet sein. Es ist gezeigt, dass das Gefäss 3 mit seiner Gefässwand 10 in einem grösseren Rohr 22 eingesteckt ist, zwischen dem und der Wand 10 ein Raum 5, der ausserhalb des Raumes des Gefässes 3 liegt, zu sehen ist. Der Innenraum 4 ist in diesem Fall mittels der Leitungsstücke 11, die die Wandung 1 und die Gefässwand 10 durchsetzen, verbunden.

## Ansprüche

1. Stofftauschvorrichtung mit einem einen Fluidstrom (2) aufnehmenden Gefäß (3), in dem ein Element angeordnet ist, dessen Wandung (1) für mindestens eine Komponente des Fluidstroms (2) permeabel ist und einen Innenraum (4) des Elements abgrenzt, welcher an einen Raum (5) außerhalb des Gefässes (3) durch die Gefäßwand (10) angeschlossen ist, dadurch **gekennzeichnet**, daß das Element aus mehreren Platten, Lamellen oder Rohren besteht, welche Leitflächen eines statischen Mischers bilden, die Flechtströmungen erzeugen, wodurch das Element einen Turbulenzgenerator (8) bildet.

2. Stofftauschvorrichtung nach Anspruch 1, dadurch gekennzeichnet, daß die Wandung (1) semipermeabel ausgebildet ist, so daß sie für ein Fluid durchlässig ist, welches aus dem Raum (5) außerhalb des Gefässes (3) zum Fluidstrom (2) im Gefäß (3) zugemischt wird, und daß die Wandung (1) kreuzstromförmig angeordnet ist.

3. Stofftauschvorrichtung nach Anspruch 1, dadurch gekennzeichnet, daß die Wandung (1) als Filter eine Materialschichtlage mit Porengrößen für den Mikro- bis Ultrafiltrationsbereich aufweist.

4. Stofftauschvorrichtung nach Anspruch 1, dadurch gekennzeichnet, daß das Element in Form von Platten oder gewellten Folien ausgebildet ist (Fig. 5, 7, 13, 14), wobei die einzelnen Platten oder Folien zu einem statischen Mischer zusammengebaut sind in der Art, daß quer zueinander verlaufende Wellentäler entstehen.

5. Stofftauschvorrichtung nach Anspruch 1, dadurch gekennzeichnet, daß der Innenraum (4) des Elements direkt durch die Gefäßwand (10) in den Raum (5) außerhalb des Gefässes (3) mündet (Fig. 5, 6, 14).

6. Stofftauschvorrichtung nach Anspruch 1, dadurch gekennzeichnet, daß der Innenraum (4) mittels eines die permeable Wandung (1) und die Gefäßwand (10) durchsetzenden Leitungsstücks (11) an den Raum (5) außerhalb des Gefässes (3) angeschlossen ist.

7. Stofftauschvorrichtung nach Anspruch 1, dadurch gekennzeichnet, daß sich durch die Wandung (1) und damit durch den Innenraum (4), gegen diesen geschlossene Durchtritte (20, in Fig. 13) erstrecken, so daß der Fluidstrom (2) nicht nur entlang der Wandung (1) des Elements, sondern auch durch dieses in dem Gefäß (3) fließen kann.

8. Stofftauschvorrichtung nach Anspruch 7, dadurch gekennzeichnet, daß die Durchtritte (20) rohrförmig sind (Fig. 13).

9. Stofftauschvorrichtung nach Anspruch 7, dadurch gekennzeichnet, daß die Durchtritte schlitzförmig sind (12 in Fig. 11).

10. Stofftauschvorrichtung nach Anspruch 3 für Ultrafiltration, dadurch gekennzeichnet, daß die Materialschichtlage der Wandung aus Polysulfon besteht, das auf ein aus mehreren Lagen gesintertes Stützgitter (17) aufgetragen bzw. hineinimprägniert ist.

11. Stofftauschvorrichtung nach Anspruch 1, dadurch gekennzeichnet, daß die permeable Wandung (1) den Innenraum (4) nur von einer Seite abgrenzt, wobei an der anderen Seite des Innenraums (4) eine unpermeable Wand vorgesehen ist.

12. Stofftauschvorrichtung nach Anspruch 2 zum blasenfreien Begasen des Fluidstroms (2), dadurch gekennzeichnet, daß die Wandung (1) eine semipermeable Materialschichtlage aufweist, welche für ein gasförmiges, zuzumischendes Medium durchlässig ist.

13. Stofftauschvorrichtung nach Anspruch 1, dadurch gekennzeichnet, daß an der permeablen Wandung (1) Leitschaufeln oder Leitflächen (21 in Fig. 12) angeordnet sind.

**Claims**

1. A mass-transfer device comprising a vessel (3) receiving a stream of fluid (2) and containing an element having a wall (1) which is permeable to at least one component of the fluid stream (2) and bounds an inner chamber (4) of the element, the inner chamber being connected through the vessel wall (10) to a chamber (5) outside the vessel, characterised in that the element comprises a number of plates, lamellae or tubes forming static mixer baffles which generate turbulence, so that the element constitutes a turbulence generator (8).

2. A mass-transfer device according to claim 1, characterised in that the wall (1) is made semi-permeable so that it is permeable to a fluid from the chamber (5) outside the vessel (3) mixed with the fluid stream (2) in the vessel (3), and the wall (1) is disposed in cross-current form.

3. A mass-transfer device according to claim 1, characterised in that the wall (1) has a filter in the form of a layer of material having pores sizes for the micro to ultra filtration range.

4. A mass-transfer device according to claim 5, characterised in that the element is in the form of plates or corrugated foils (Figures 5, 7, 13, 14), the individual plates or foils being combined into a static mixer such that the troughs of the corrugations extend transversely to one another.

5. A mass-transfer device according to claim 1, characterised in that the inner chamber (4) of the element opens directly through the vessel wall (10) into the chamber (5) outside the vessel (3) (Figures 5, 6, 14).

6. A mass-transfer device according to claim 1, characterised in that the inner chamber (4) is connected to the chamber (5) outside the vessel (3) by a pipe (11) which extends through the permeable wall (1) and the vessel wall (10).

7. A mass-transfer device according to claim 1, characterised in that passages (20 in Figure 13) extend through the wall (1) and consequently through the inner chamber (4) and are sealed therefrom, so that the fluid stream (2) can flow into the vessel (3) not only along but also through the wall (1) of the element.

8. A mass-transfer device according to claim 7, characterised in that the passages (20) are tubular (Figure 13).

9. A mass-transfer device according to claim 7, characterised in that the passages are in the form of slots (12 in Figure 11).

10. A mass-transfer device according to claim 3 for ultra-filtration, characterised in that the layer of material of the wall is of polysulphone and is applied to or impregnated into a multi-layer sintered supporting grid (17).

11. A mass-transfer device according to claim 1, characterised in that the permeable wall (1) bounds the inner chamber (4) on one side only, whereas a nonpermeable wall is provided on the other side of the inner chamber (4).

12. A mass-transfer device according to claim 2 for supplying bubble-free gas to the fluid stream (2), characterised in that the wall (1) comprises a layer of semi-permeable material which is permeable to a gaseous medium for adding to the mixture.

13. A mass-transfer device according to claim 1, characterised in that baffle blades or baffle surfaces (21 in Figure 12) are disposed on the permeable wall (1).

**Revendications**

1. Dispositif d'échange de substances comportant un récipient (3) recevant un courant (2) de fluide, dans lequel est disposé un élément dont la paroi (1) est perméable à au moins un composant du courant de fluide (2) et délimite à l'intérieur de l'élément un espace (4) qui est raccordé, à travers la paroi (10) du récipient (3), à un espace (5) situé à l'extérieur de ce dernier, caractérisé en ce que l'élément est constitué de plusieurs plaques, lamelles ou tubes formant des déflecteurs d'un mélangeur statique qui créent des courants de turbulence, de sorte que l'élément forme un générateur (8) de turbulence.

2. Dispositif d'échange de substances suivant la revendication 1, caractérisé en ce que la paroi (1) est rendue semi-perméable, de manière qu'elle laisse passer un fluide qui est mélangé depuis l'espace (5) extérieur au récipient (3) au courant de fluide (2) dans le récipient (3) et en ce que la paroi (1) a une disposition formant des courant croisés.

3. Dispositif d'échange de substances suivant la revendication 1, caractérisé en ce que la paroi (1) présente comme filtre une couche de matière présentant des diamètres de pores pour le domaine allant de la microfiltration à l'ultrafiltration.

4. Dispositif d'échange de substances suivant la revendication 1, caractérisé en ce que l'élément est réalisé en forme de plaques ou de feuilles ondulées (figures 5, 7, 13, 14), les parties ou les feuilles individuelles étant assemblées en un mélangeur statique de façon que soient produits des creux d'ondulation s'étendant transversalement les uns par rapport aux autres.

5. Dispositif d'échange de substances suivant la revendication 1, caractérisé en ce que l'espace intérieur (4) de l'élément débouche directement à travers la paroi (10) du récipient dans l'espace (5) extérieur au récipient (3) (figures 5, 6, 14).

6. Dispositif d'échange de substances suivant la revendication 1, caractérisé en ce que l'espace intérieur (4) est raccordé, au moyen d'un tronçon de conduite (11) traversant la paroi perméable (1) et la paroi (10) du récipient, à l'espace (5) extérieur au récipient (3).

7. Dispositif d'échange de substances suivant la revendication 1, caractérisé en ce que des passages (désignés par 20 sur la figure 13) fermés par rapport à l'espace intérieur (4) s'étendent à travers la paroi (1) ainsi qu'à travers l'espace intérieur (4) de manière que le courant de fluide (2) puisse s'écouler non seulement le long de la paroi (1) de l'élément, mais aussi à travers cet élément dans le récipient (3).

8. Dispositif d'échange de substances suivant la revendication 7, caractérisé en ce que les passages (20) sont de forme tubulaire (figure 13).

9. Dispositif d'échange de substances suivant la revendication 7, caractérisé en ce que les passages sont en forme de fentes (12 sur la figure 11).

10. Dispositif d'échange de substances suivant la revendication 3 pour l'ultrafiltration, caractérisé en ce que la couche de matière de la paroi consiste en polysulfone qui est appliquée sur une grille de support (17) formée par frittage de plusieurs couches et s'imprègne dans cette grille.

11. Dispositif d'échange de substances suivant la revendication 1, caractérisé en ce que la paroi perméable (1) délimite l'espace intérieur (4) d'un seul côté, une paroi imperméable étant prévue de l'autre côté de l'espace intérieur (4).

12. Dispositif d'échange de substances suivant la revendication 2 pour l'introduction de gaz dans le courant de fluide (2) sans formation de bulles, caractérisé en ce que la paroi (1) présente une couche de matière semi-perméable qui laisse passer un fluide gazeux devant être mélangé.

13. Dispositif d'échange de substances suivant la revendication 1, caractérisé en ce que des aubes ou des déflecteurs (21 sur la figure 12) sont disposés sur la paroi perméable (1).

FIG. 1

FIG. 2

FIG. 4

FIG. 3

FIG. 5

FIG. 6

FIG. 9

FIG. 8

FIG. 7

FIG. 10

FIG. 11

FIG. 12

FIG. 13

FIG. 14